# EUROPEAN PATENT APPLICATION

(11) **EP 4 596 933 A1**
(43) Date of publication of application: **06.08.2025**
(21) Application number: 23870363.1
(22) Date of filing: 14.09.2023
(51) Int. Cl.: F16K 11/22, F16K 31/06, F16K 13/00

(54) **INTEGRATED MODULE, THERMAL MANAGEMENT SYSTEM, AND VEHICLE**

(30) Priority: 29.09.2022 CN 202222605737 U
(71) Applicant: BYD Company Limited, Shenzhen, Guangdong 518118 (CN)
(72) Inventor: CHEN, Tuping, Shenzhen, Guangdong 518118 (CN); ZHANG, Jianjun, Shenzhen, Guangdong 518118 (CN); XU, Min, Shenzhen, Guangdong 518118 (CN); YE, Meijiao, Shenzhen, Guangdong 518118 (CN); LI, Yuzhong, Shenzhen, Guangdong 518118 (CN)
(74) Representative: Mathys & Squire
(86) International application number: PCT/CN2023/118827
(87) International publication number: WO 2024/067127

(57) **Abstract**

An integrated module (1), a thermal management system, and a vehicle. The integrated module (1) comprises: a valve seat (10), the valve seat (10) being provided with a plurality of valve cavities; control valves (20), the control valves (20) being disposed on the valve seat (10), being mounted in the valve cavities, and being each provided with a first electrical connection port (21); and throttle valves (30), the throttle valves (30) being disposed on the valve seat (10), being mounted in the valve cavities, and being each provided with a second electrical connection port (31); the opening directions of the first electrical connection port (21) and the second electrical connection port (31) being the same. Therefore, the integrated arrangement of the throttle valves (30) and the control valves (10) is achieved, the space occupied by the throttle valves (30) and the control valves (10) is reduced, the complexity of operation is reduced, and automated production can be achieved.

## Description

### CROSS-REFERENCE TO RELATED APPLICATIONS

This application is based on a Chinese patent application with application number 202222605737.9, filed on September 29, 2022, and claims the priority of this Chinese patent application. The entire content of the Chinese patent application is hereby incorporated into this application by reference.

### FIELD

This application relates to the field of vehicles. Specifically, it pertains to an integrated module, a thermal management system, and a vehicle.

### BACKGROUND

In the related technology, a plurality of components such as valves are integrated on the valve seat to improve the integration level. However, the electrical connection between the integrated module and the vehicle requires a large operating space, resulting in a relatively large occupied space.

### SUMMARY

This application is intended to solve at least one of the technical problems existing in the prior art. For this purpose, this application proposes an integrated module. By making the orientations of the first electrical connection port of the control valve and the second electrical connection port of the throttle valve the same, it is convenient to integrate the throttle valve and the control valve, reduce the operation space occupied by the electrical connection of the throttle valve and the control valve, reduce the complexity of operation, and facilitate automated production.

This application also proposes a thermal management system with the integrated module and a vehicle with the thermal management system.

According to the example of the first aspect of this application, the integrated module includes: a valve seat, the valve seat is arranged with a plurality of valve cavities; a control valve, the control valve is arranged on the valve seat and installed in the valve cavity, and the control valve is arranged with a first electrical connection port; a throttle valve, the throttle valve is arranged on the valve seat and installed in the valve cavity, and the throttle valve is arranged with a second electrical connection port, and the opening orientations of the first electrical connection port and the second electrical connection port are the same.

According to the integrated module of the example of this application, by making the orientations of the first electrical connection port of the control valve and the second electrical connection port of the throttle valve the same, it is convenient to integrate the throttle valve and the control valve, reduce the space occupied by the throttle valve and the control valve, reduce the complexity of operation, and facilitate automated production.

In addition, the integrated module according to the above examples of this application may also have the following additional technical features:

According to some examples of this application, the opening orientation of the first electrical connection port is perpendicular to the first surface of the valve seat, and the first surface is the surface of the valve seat for installing the control valve.

In some examples, the integrated module further includes a wire harness. The wire harness includes a plurality of plug-in connectors, and a plurality of the plug-in connectors are respectively plug-in mated with a plurality of first electrical connection ports and the second electrical connection ports.

In some examples, the distribution intervals of the plurality of plug-in connectors are different.

In some examples, the integrated module further includes a main connector. The main connector is arranged on the valve seat. The wire harness is connected to the main connector. The main connector is suitable for electrical connection with the central control device of the vehicle.

In some examples, the main connector, the control valve and the throttle valve are located on the same surface of the valve seat.

According to some examples of this application, a plurality of refrigerant flow channels are arranged in the valve seat, and each valve cavity is connected to at least one of the refrigerant flow channels; the control valves are arranged in plurality, and at least one of the plurality of control valves acts to connect different refrigerant flow channels to form different refrigerant circuits; the throttle valves are arranged in plurality, and the throttle valves are used to throttle and reduce the pressure of the refrigerant in each refrigerant circuit.

In some examples, the integrated module further includes a fixing component. A plurality of the throttle valves includes an electronic expansion valve. The fixing component is fixed to the coil of the electronic expansion valve, and the fixing component is snap-fitted to the valve seat.

In some examples, the fixing component includes an elastic component and an elastic hook. The elastic component abuts against the upper end surface of the valve seat, and the elastic hook is clamped to the slot on the sidewall of the valve seat.

In some examples, the elastic component is defined by bending a part of the fixing component.

According to the example of the second aspect of this application, a thermal management system is proposed. The thermal management system includes the integrated module according to the example of the first aspect of this application.

According to the thermal management system of the example of this application, by using the integrated module according to the example of the first aspect of this application, by making the orientations of the first electrical connection port of the control valve and the second electrical connection port of the throttle valve the same, it is convenient to integrate the throttle valve and the control valve, reduce the space occupied by the throttle valve and the control valve, reduce the complexity of operation, and facilitate automated production.

According to the example of the third aspect of this application, a vehicle is proposed. The vehicle includes the thermal management system according to the example of the second aspect of this application.

According to the vehicle of the example of this application, by using the thermal management system according to the example of the second aspect of this application, by making the orientations of the first electrical connection port of the control valve and the second electrical connection port of the throttle valve the same, it is convenient to integrate the throttle valve and the control valve, reduce the space occupied by the throttle valve and the control valve, reduce the complexity of operation, and facilitate automated production.

The additional aspects and advantages of this application will be partly presented in the following description, and will become obvious partly from the following description, or be understood through the practice of this application.

### BRIEF DESCRIPTION OF THE DRAWINGS

The aforementioned and/or additional aspects and advantages of this application will become apparent and easily understood from the description of the examples in conjunction with the accompanying drawings, wherein:
FIG. 1 is a schematic diagram of the structure of the integrated module according to an example of this application.
FIG. 2 is a schematic diagram of the structure of the integrated module in one direction according to an example of this application.
FIG. 3 is a schematic diagram of the structure of the integrated module in another direction according to an example of this application.
FIG. 4 is a schematic diagram of the structure of the integrated module in another direction according to an example of this application.
FIG. 5 is a schematic diagram of the structure of the throttle valve according to an example of this application.
FIG. 6 is a side view of FIG. 5.
FIG. 7 is a schematic diagram of the throttle valve according to another example of this application.
FIG. 8 is a top view of FIG. 7.
FIG. 9 is a bottom view of FIG. 7.
FIG. 10 is a schematic diagram of the throttle valve according to another example of this application.
FIG. 11 is a top view of FIG. 10.
FIG. 12 is a bottom view of FIG. 10.
FIG. 13 is a schematic diagram of the fixing component according to the example of this application.
FIG. 14 is a schematic diagram of the thermal management system according to the example of this application.

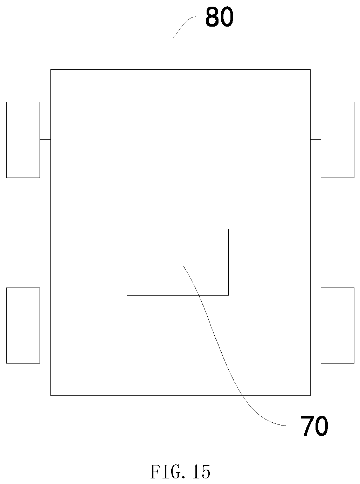

FIG. 15 is a schematic diagram of the vehicle according to the example of this application.

Reference numerals: integrated module 1,valve seat 10,control valve 20, first electrical connection port 21,throttle valve 30, second electrical connection port 31, electronic expansion valve 32, fixing component 33, elastic component 331, elastic hook 332,wire harness 40, plug-in connector 41,main connector 50,thermal management system 70, vehicle 80.

### DETAILED DESCRIPTION

The examples of this application are described in detail below. The examples of the examples are shown in the drawings, where the same or similar reference numerals denote the same or similar elements or elements with the same or similar functions throughout. The examples described with reference to the drawings are exemplary only and are used to explain this application, and should not be construed as limiting this application.

The integrated module 1 according to the example of this application is described below with reference to the drawings.

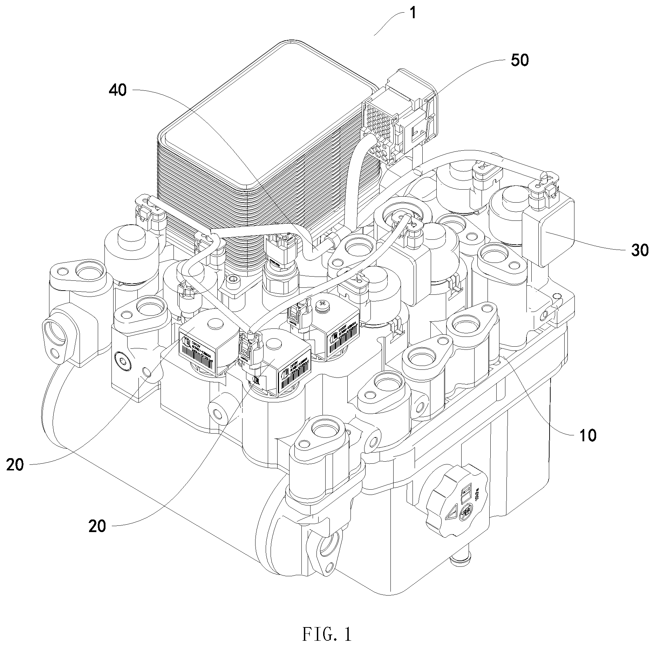

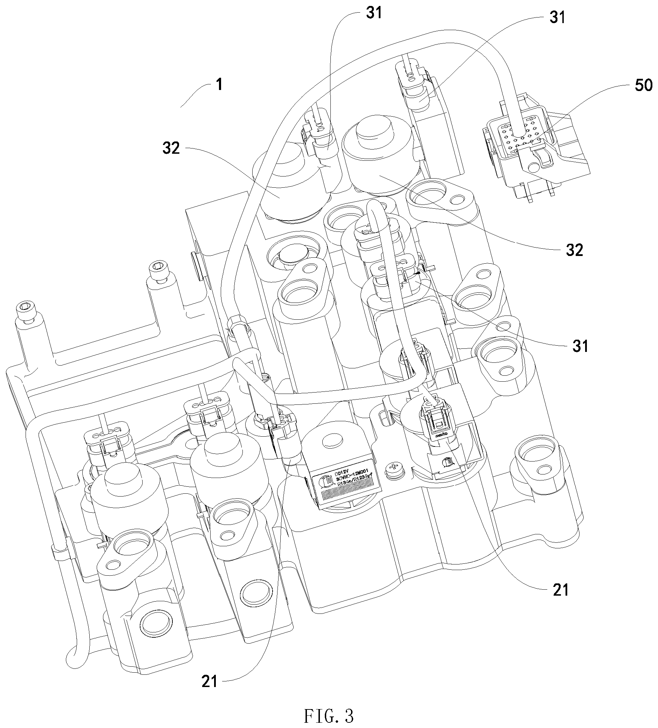

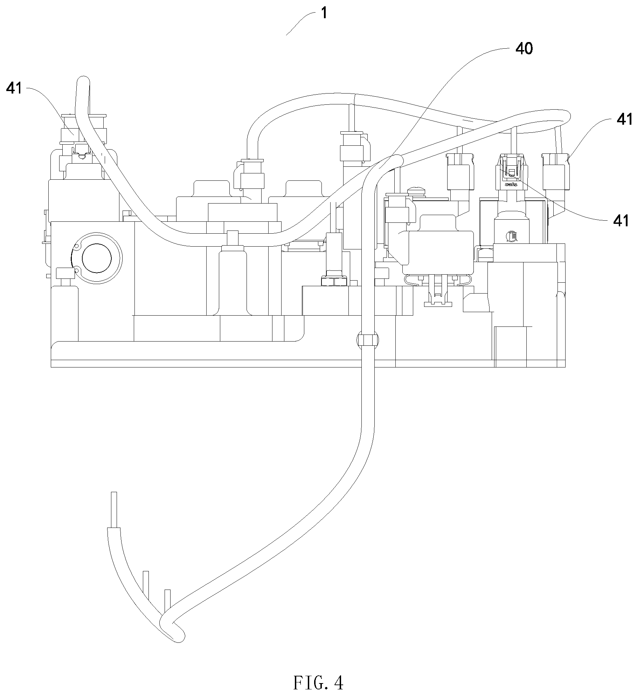

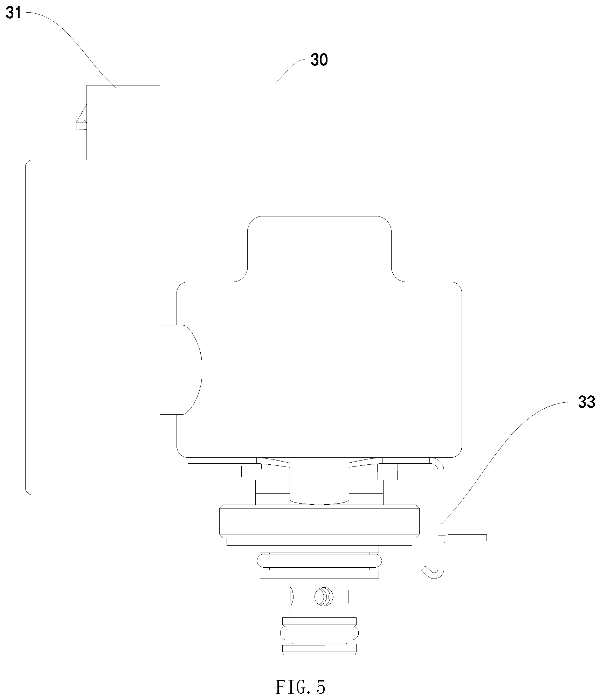

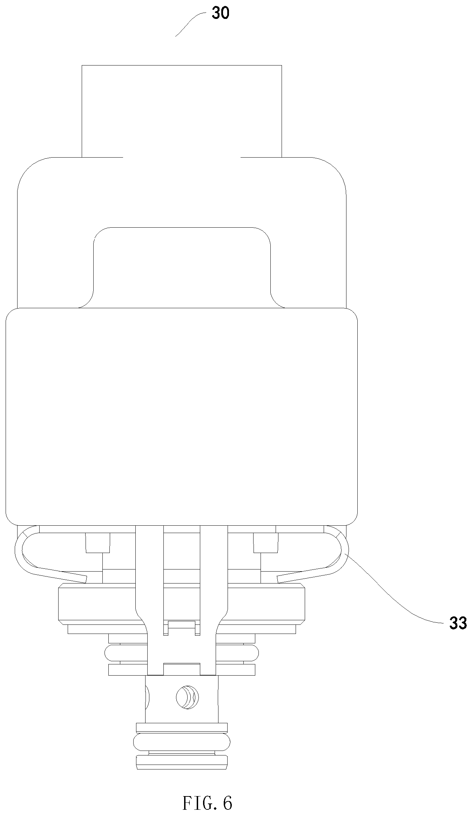

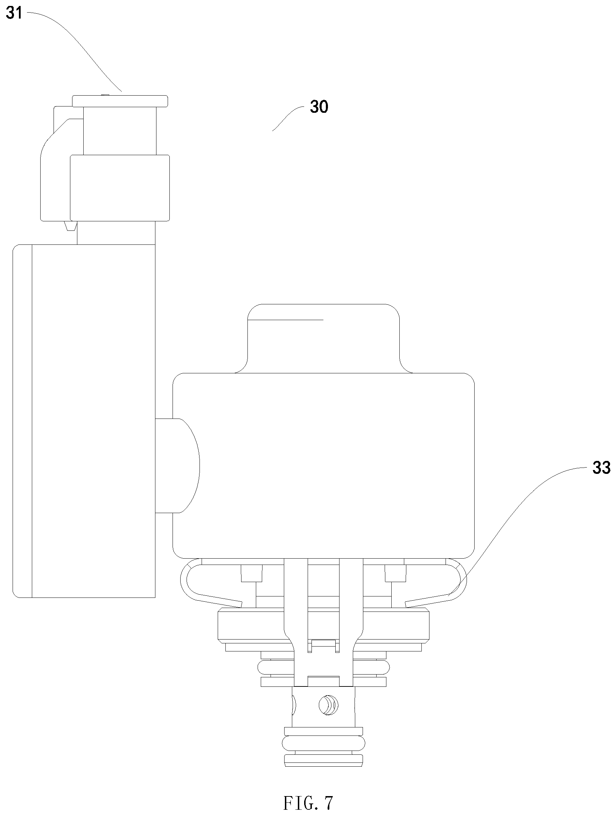

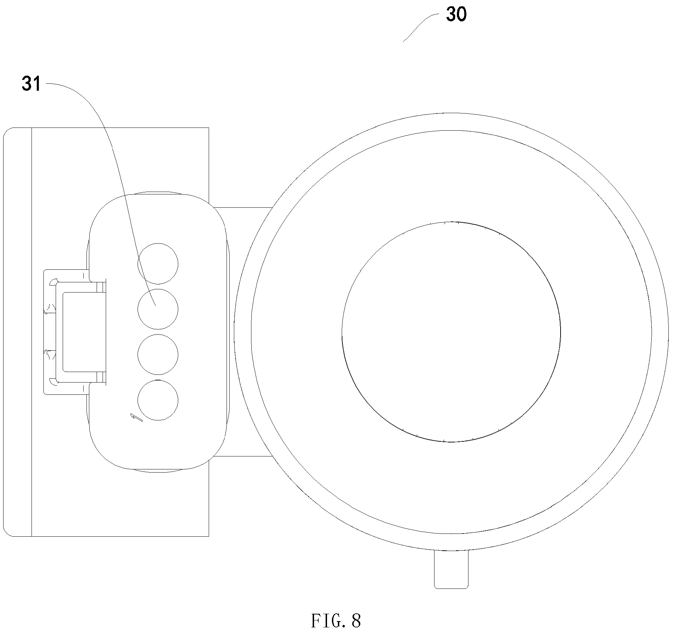

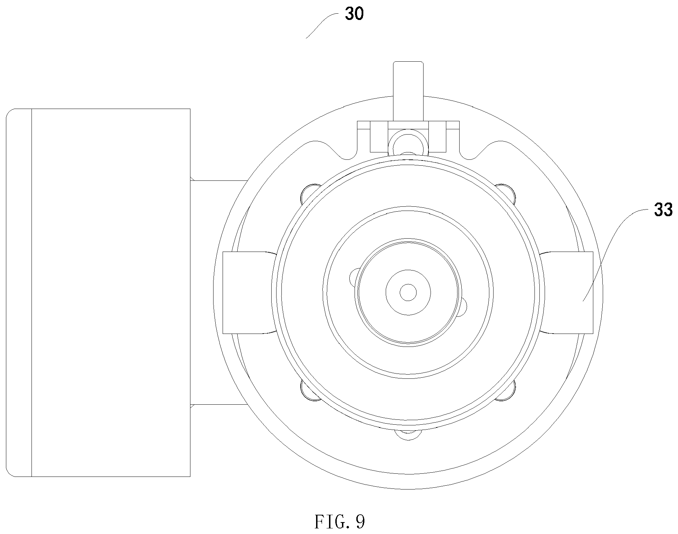

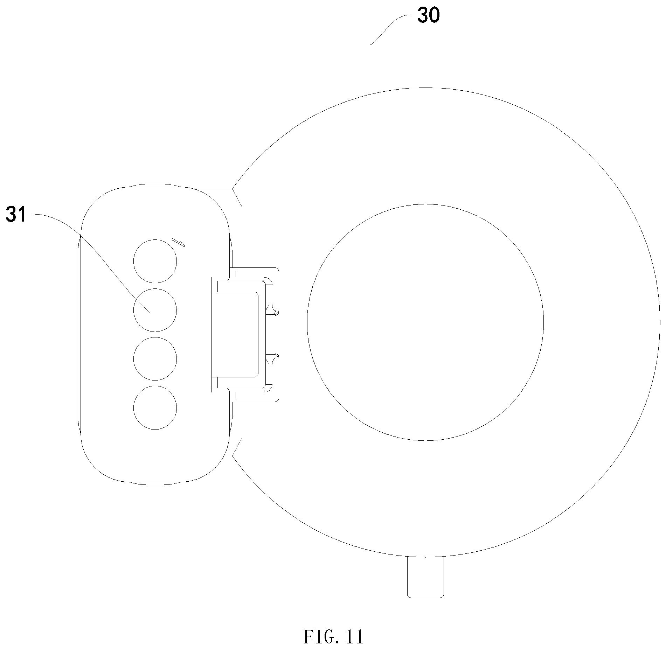

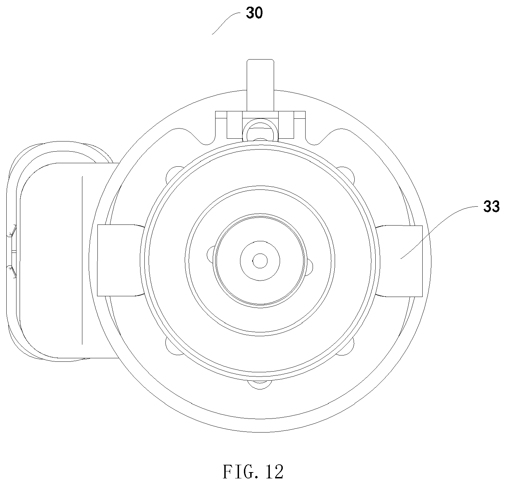

As shown in FIGS. 1 to 13, the integrated module 1 according to the example of this application includes a valve seat 10, a control valve 20, and a throttle valve 30.

The valve seat 10 is arranged with a plurality of valve cavities. The control valve 20 is arranged on the valve seat 10 and installed in the valve cavity. The throttle valve 30 is arranged on the valve seat 10 and installed in the valve cavity, so as to integrate the control valve 20 and the throttle valve 30 on the valve seat 10.

Each control valve 20 is arranged with a first electrical connection port 21, and the throttle valve 30 is arranged with a second electrical connection port 31. The opening orientations of the first electrical connection port 21 and the second electrical connection port 31 are the same. This arrangement, on the one hand, helps to reduce the operating space occupied by the electrical connection between the throttle valve 30 and the control valve 20. On the other hand, when connecting the first electrical connection port 21 or the second electrical connection port 31, mutual interference between the throttle valve 30 and the control valve 20 can be avoided.

Specifically, by making the opening orientations of the first electrical connection port 21 and the second electrical connection port 31 the same, the connection to the first electrical connection port 21 or the second electrical connection port 31 can be achieved through the same operation, which is convenient for reducing the complexity of operation and facilitating automated production. At the same time, this arrangement can make the structures of the throttle valve 30 and the control valve 20 more compact, so that more throttle valves 30 and control valves 20 can be installed in the same-sized space, or the space occupied by the same number of throttle valves 30 and control valves 20 can be reduced.

Compared with the situation where the orientations of the first electrical connection port 21 and the second electrical connection port 31 are different, making them the same is conducive to the integration of the throttle valve 30 and the control valve 20, helps to reduce the operating space occupied by the throttle valve 30 and the control valve 20, and can reduce the complexity of connecting the operating parts to the first electrical connection port 21 or the second electrical connection port 31.

For example, if the orientations of the first electrical connection port 21 and the second electrical connection port 31 are different, for example, the orientation of the first electrical connection port 21 is upward, and the orientation of the second electrical connection port 31 is to the left, then spaces need to be reserved above the control valve 20 for connecting the first electrical connection port 21, and on the left side of the throttle valve 30 for connecting the second electrical connection port 31. In this case, the space occupied by the throttle valve 30 and the control valve 20 will be increased.

In this application, the orientations of the first electrical connection port 21 and the second electrical connection port 31 are the same, for example, both are upward. Then, when connecting the first electrical connection port 21 or the second electrical connection port 31, the connection between the part and the first electrical connection port 21 or the second electrical connection port 31 can be achieved only by operating the part in the vertical direction, which is convenient for reducing the operation difficulty. At the same time, only the space above the throttle valve 30 and the control valve 20 needs to be reserved for installation, which is convenient for integrating the throttle valve 30 and the control valve 20 and reducing the space they occupy.

Therefore, according to the integrated module 1 of the example of this application, by making the orientations of the first electrical connection port 21 of the control valve 20 and the second electrical connection port 31 of the throttle valve 30 the same, it is convenient to integrate the throttle valve 30 and the control valve 20, reduce the space occupied by the throttle valve 30 and the control valve 20, reduce the complexity of operation, and facilitate automated production.

The integrated module 1 according to specific examples of this application is described below with reference to the drawings.

As shown in FIGS. 1 to 13, the integrated module 1 according to the example of this application includes a valve seat 10, a control valve 20, and a throttle valve 30.

In some examples of this application, the opening orientation of the first electrical connection port 21 is perpendicular to the first surface of the valve seat 10. The first surface is the surface of the valve seat 10 used for installing the control valve 20. This is to make full use of the space on the first surface of the valve seat 10 and avoid the first electrical connection port 21 from occupying excessive space. Such an arrangement facilitates the installation of more control valves 20 and throttle valves 30 on the first surface, realizing the integrated setting of the control valves 20 and throttle valves 30.

Specifically, the control valve 20 and the throttle valve 30 can be arranged along the length and width directions of the first surface, and the opening orientation of the first electrical connection port 21 is perpendicular to the first surface of the valve seat 10. When operating the connection between the part and the first electrical connection port 21, only the position of the part needs to be moved in the direction perpendicular to the first surface, so as to avoid the influence of the control valve 20 or the throttle valve 30 on the first surface on the connection between the part and the first electrical connection port 21, and thus facilitate the quick and convenient connection between the part and the first electrical connection port 21 or the second electrical connection port 31.

In some examples of this application, a plurality of refrigerant flow channels are arranged inside the valve seat 10, and each valve cavity is connected to at least one refrigerant flow channel. The integrated module 1 includes a plurality of control valves 20, and at least one of the control valves 20 acts to connect different refrigerant flow channels to form different refrigerant circuits, so that the refrigerant can flow in the corresponding refrigerant circuits according to requirements, and the heat absorption or dissipation in different areas can be achieved by using the refrigerant.

The integrated module 1 includes a plurality of throttle valves 30, and the throttle valves 30 are used to throttle and reduce the pressure of the refrigerant in the refrigerant circuit passing through them, so as to convert the high-temperature or medium-temperature refrigerant into a low-temperature refrigerant, and thus realize the circular flow of the refrigerant in the refrigerant circuit.

In some examples of this application, the integrated module 1 further includes a wire harness 40. The wire harness 40 includes a plurality of plug-in connectors 41, and the plurality of plug-in connectors 41 are respectively plug-in mated with the plurality of first electrical connection ports 21 and the second electrical connection ports 31, so as to transmit the signals in the integrated module 1 to the first electrical connection ports 21 and the second electrical connection ports 31 through the wire harness 40, and then to the control valve 20 and the throttle valve 30. In this way, the control valve 20 can connect the corresponding refrigerant flow channels, and the corresponding throttle valve 30 can throttle and reduce the pressure of the refrigerant in the refrigerant flow channels, realizing the circular flow of the refrigerant in the corresponding refrigerant circuits.

In some optional examples of this application, the distribution intervals of the plurality of plug-in connectors 41 are different, so as to determine the positions of the plug-in connectors 41 in the integrated module 1 through the distribution intervals, and thus accurately achieve the plug-in mating between the plug-in connectors 41 and the corresponding first electrical connection ports 21 or second electrical connection ports 31, and avoid the plug-in connectors 41 from being inserted into the wrong first electrical connection ports 21 or second electrical connection ports 31.

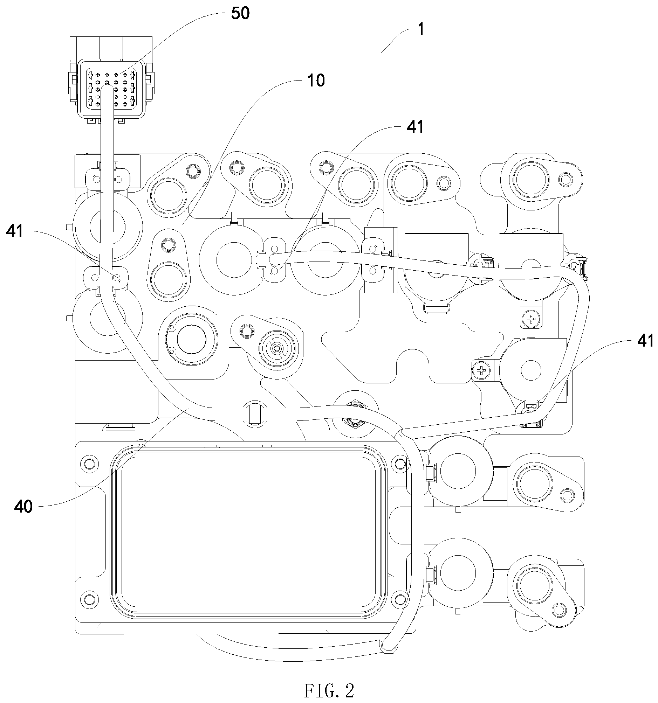

As shown in FIG. 2, in some examples, the lengths of the wire harness 40 between the plurality of plug-in connectors 41 are different, so that the distribution intervals of the plurality of plug-in connectors 41 are different. Since the distances between each control valve 20 and each throttle valve 30 are different, the lengths of the wire harness 40 can be matched with the corresponding control valve 20 and throttle valve 30, so as to achieve the plug-in mating between the plug-in connectors 41 and the corresponding first electrical connection ports 21 or second electrical connection ports 31, and avoid the plug-in connectors 41 from being inserted into the wrong first electrical connection ports 21 or second electrical connection ports 31.

In some examples of this application, the integrated module 1 further includes a main connector 50. The main connector 50 is arranged on the valve seat 10. The wire harness 40 is connected to the main connector 50, and the main connector 50 is suitable for electrical connection with the central control device of the vehicle 80. The central control device of the vehicle 80 can determine which refrigerant flow channel in the valve seat 10 the refrigerant flows through according to the requirements of the vehicle 80. The central control device transmits the signal to the main connector 50, and then transmits it to the corresponding control valve 20 and throttle valve 30 through the wire harness 40 and the plug-in connectors 41. Then, the control valve 20 and the throttle valve 30 are used to open the corresponding valve cavities, thus forming a refrigerant flow path to meet the requirements of the vehicle 80.

In some optional examples of this application, the main connector 50, the control valve 20, and the throttle valve 30 are located on the same surface of the valve seat 10. On the one hand, it is convenient to integrate the main connector 50, the control valve 20, and the throttle valve 30 on the unified surface of the valve seat 10, which helps to reduce the occupied space of the main connector 50, the control valve 20, and the throttle valve 30. On the other hand, it is convenient to reduce the length of the wire harness 40. When using the wire harness 40 to connect the control valve 20 to the main connector 50 and using the wire harness 40 to connect the throttle valve 30 to the control valve 20, the wire harness 40 can be prevented from being too long and getting tangled. In some optional examples of this application, the throttle valve 30 includes an electronic expansion valve 32. At least one refrigerant flow channel is throttled and depressurized by the electronic expansion valve 32, so as to convert the high-temperature or medium-temperature refrigerant into a low-temperature refrigerant, thus realizing the circular flow of the refrigerant in the refrigerant circuit.

Among them, the electronic expansion valve 32 has a low height and a small volume, which is convenient for reducing the occupied space of the throttle valve 30 on the first surface. At the same time, the electronic expansion valve 32 generates less noise during operation and has a fast response, which is convenient for improving the user experience.

In addition, the electronic expansion valve 32 can achieve two-way flow, so as to adapt to the refrigerant flowing in different directions in the refrigerant circuit. Thus, when the refrigerant flows in the refrigerant circuit, the heat absorption or dissipation effect of some areas can be achieved, which is convenient for realizing the functional diversification of the integrated module 1.

In some specific examples of this application, the integrated module 1 further includes a fixing component 33. The fixing component 33 is fixed to the coil of the electronic expansion valve 32, and the fixing component 33 is snap-fitted to the valve seat 10, so as to stably install the electronic expansion valve 32 on the valve seat 10 by using the snap fit between the fixing component 33 and the valve seat 10 and prevent the electronic expansion valve 32 from falling off the valve seat 10.

In some examples, the fixing component 33 includes an elastic component 331 and an elastic hook 332. The elastic component 331 abuts against the upper end surface of the valve seat 10, and the elastic hook 332 is clamped to the slot on the sidewall of the valve seat 10, so as to achieve the cooperation between the fixing component 33 and the opposite sidewall of the valve seat 10, thereby stably fixing the fixing component 33 on the valve seat 10 and stably fixing the electronic expansion valve 32 on the valve seat 10, preventing the valve seat 10 from falling off the valve seat 10 after being subjected to external force and affecting the throttling and pressure reduction of the refrigerant by the electronic expansion valve 32.

In some examples, the elastic component 331 is defined by bending a part of the fixing component 33. This arrangement is convenient for reducing the complexity of the components on the fixing component 33 and strengthening the overall strength of the fixing component 33, so as to prevent the fixing component 33 from being damaged due to the force when the electronic expansion valve 32 is installed on the valve seat 10.

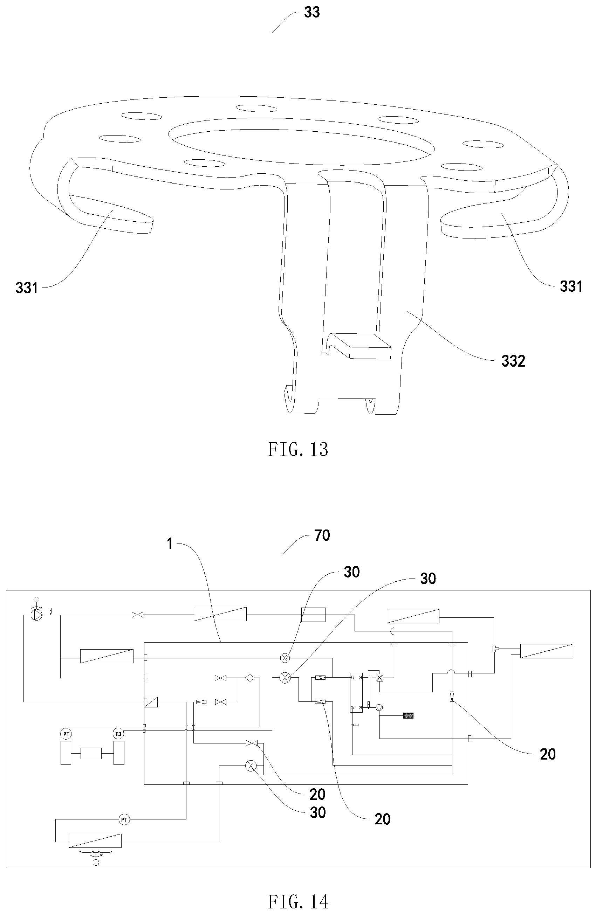

As shown in FIG. 13, in this example, the fixing component 33 includes two elastic components 331 and one elastic hook 332. The two elastic components 331 are arranged oppositely, and the elastic hook 332 is arranged between the two elastic components 331. The elastic hook 332 is cantilevered and extends vertically. The vertical direction is perpendicular to the first surface of the valve seat 10.

When the electronic expansion valve 32 needs to be installed on the valve seat 10, the electronic expansion valve 32 should be gradually moved closer to the valve seat 10 in the vertical direction. At this time, the two elastic components 331 abut against the upper end surface of the valve seat 10, so that there is a pre-tightening force between the electronic expansion valve 32 and the valve seat 10, preventing the electronic expansion valve 32 on the valve seat 10 from shaking.

At the same time, the free end of the elastic hook 332 contacts the sidewall of the valve seat 10 and deforms in the direction away from the valve seat 10 under the drive of the valve seat 10. When the electronic expansion valve 32 is installed in place, the free end of the elastic hook 332 recovers its deformation and is clamped to the slot on the sidewall of the valve seat 10, so as to stably install the electronic expansion valve 32 on the valve seat 10.

As shown in FIG. 13, in this example, the free end of the elastic hook 332 is located below the elastic component 331. When the electronic expansion valve 32 is installed in place, the free end of the elastic hook 332 is clamped to the slot on the valve seat sidewall, and the elastic component 331 abuts against the upper end surface of the valve seat, so as to stably install the electronic expansion valve 32 on the valve seat 10.

Among them, the free end of the elastic hook 332 is arranged with a hook. When the elastic hook 332 recovers its deformation, the hook is clamped to the slot on the sidewall of the valve seat 10, so as to fix the fixing component 33 on the valve seat 10 through the elastic hook 332, and then fix the electronic expansion valve 32 on the valve seat 10.

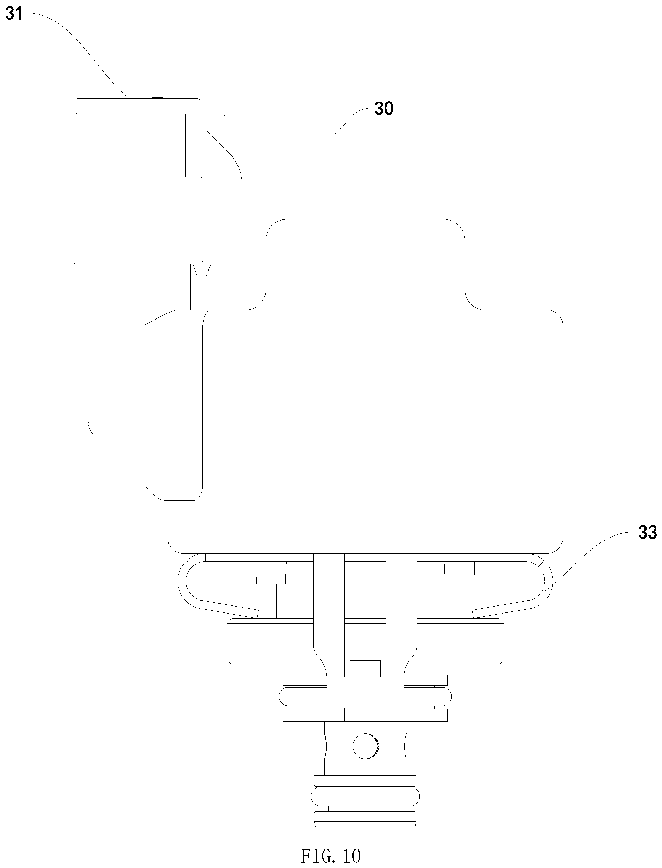

When the electronic expansion valve 32 needs to be removed from the valve seat 10, the electronic expansion valve 32 can be pressed in the vertical direction towards the valve seat 10 (the vertical direction is shown in FIG. 10), so that the hook at the free end of the elastic hook 332 is disengaged from the slot on the sidewall of the valve seat 10. Then, the free end of the elastic hook 332 is deformed in the direction away from the valve seat 10, so that the elastic hook 332 is disengaged from the valve seat 10. Finally, the electronic expansion valve 32 is moved in the vertical direction away from the valve seat 10, so that the elastic component 331 is disengaged from the sidewall of the valve seat 10, and the electronic expansion valve 32 is removed from the valve seat 10.

The thermal management system 70 according to the example of this application is described below. The thermal management system 70 according to the example of this application includes the integrated module 1 according to the above-mentioned examples of this application.

According to the thermal management system 70 of the example of this application, by using the integrated module 1 according to the above-mentioned examples of this application, by making the orientations of the first electrical connection port 21 of the control valve 20 and the second electrical connection port 31 of the throttle valve 30 the same, it is convenient to integrate the throttle valve 30 and the control valve 20, reduce the space occupied by the throttle valve 30 and the control valve 20, reduce the complexity of operation, and facilitate automated production.

The vehicle 80 according to the example of this application is described below. The vehicle 80 according to the example of this application includes the thermal management system 70 according to the above-mentioned examples of this application.

According to the vehicle 80 of the example of this application, by using the thermal management system 70 according to the above-mentioned examples of this application, by making the orientations of the first electrical connection port 21 of the control valve 20 and the second electrical connection port 31 of the throttle valve 30 the same, it is convenient to integrate the throttlevalve30 and the control valve 20, reduce the space occupied by the throttle valve 30 and the control valve 20, reduce the complexity of operation, and facilitate automated production.

The other components and operations of the vehicle 80 according to the example of this application are known to those of ordinary skill in the art and will not be described in detail here.

In the description of this application, it should be understood that terms such as "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential" indicate the orientation or positional relationship shown in the drawings, which are only for the convenience of describing this application and simplifying the description, rather than indicating or implying that the device or element must have a specific orientation, be constructed and operated in a specific orientation. Therefore, it cannot be construed as a limitation of this application. In addition, features defined as "first" and "second" may explicitly or implicitly include one or more of such features. In the description of this application, unless otherwise stated, "a plurality of" means two or more. In the description of this application, when the first feature is "above" or "below" the second feature, it may include the case where the first and second features are in direct contact, or the case where the first and second features are not in direct contact but are in contact through other features between them.

In the description of this application, when the first feature is "above", "over" or "on" the second feature, it includes the case where the first feature is directly above the second feature and the case where the first feature is obliquely above the second feature, or it simply means that the horizontal height of the first feature is higher than that of the second feature.

In the description of this application, it should be noted that, unless otherwise clearly specified and limited, terms such as "installation", "connection", "connected" should be understood in a broad sense. For example, it can be a fixed connection, a detachable connection, or an integral connection; it can be a mechanical connection or an electrical connection; it can be a direct connection or an indirect connection through an intermediate medium, or it can be the internal communication of two elements. For those of ordinary skill in the art, the specific meanings of these terms in this application can be understood according to specific situations.

In the description of this specification, the description referring to terms such as "one example", "some examples", "exemplary examples", "example", "specific example", or "some examples" means that the specific features, structures, materials or characteristics described in combination with the example or example are included in at least one example or example of this application. In this specification, the schematic expressions of the above terms do not necessarily refer to the same example or example. Moreover, the specific features, structures, materials or characteristics described can be combined in any one or more examples or examples in a suitable manner.

Although the examples of this application have been shown and described, those of ordinary skill in the art can understand that various changes, modifications, substitutions and variations can be made to these examples without departing from the principles and purposes of this application. The scope of this application is defined by the claims and their equivalents.

## Claims

1. An integrated module (1), comprising:
a valve seat (10), the valve seat (10) being arranged with a plurality of valve cavities;
a control valve (20), the control valve (20) being arranged on the valve seat (10), the control valve (10) being installed in the valve cavity, and the control valve (20) being arranged with a first electrical connection port (21);
a throttle valve (30), the throttle valve (30) being arranged on the valve seat (10), the throttle valve (30) being installed in the valve cavity, and the throttle valve (30) being arranged with a second electrical connection port (31);
opening orientations of the first electrical connection port (21) and the second electrical connection port (31) are the same.

2. The integrated module (1) according to claim 1, wherein the opening orientation of the first electrical connection port (21) is perpendicular to a first surface of the valve seat (10), and the first surface is a surface of the valve seat (10) for installing the control valve (20).

3. The integrated module (1) according to any one of claim 1 or claim 2, further comprising a wire harness (40), the wire harness (40) comprising a plurality of plug-in connectors (41), the plurality of plug-in connectors (41) being respectively plug-in mated with the plurality of first electrical connection ports (21) and the second electrical connection ports (31).

4. The integrated module (1) according to claim 3, wherein distribution intervals of the plurality of plug-in connectors (41) are different.

5. The integrated module (1) according to any one of claim 3 or claim 4, further comprising a main connector (50), the main connector (50) being arranged on the valve seat (10), the wire harness (40) being connected to the main connector (50), and the main connector (50) being configurable for electrical connection with a central control device of a vehicle (80).

6. The integrated module (1) according to claim 5, wherein the main connector (50), the control valve (20) and the throttle valve (30) are located on the same surface of the valve seat (10).

7. The integrated module (1) according to any one of claims 1 to 6, wherein a plurality of refrigerant flow channels are arranged inside the valve seat (10), and each of the valve cavities is connected to at least one of the refrigerant flow channels;
there are a plurality of control valves (20), and at least one of the plurality of control valves (20) acts to connect the different refrigerant flow channels to form different refrigerant circuits;
there are a plurality of throttle valves (30), and the throttle valve (30) is configured to throttle and reduce a pressure of a refrigerant in the refrigerant circuit passing through it.

8. The integrated module (1) according to claim 7, further comprising a fixing component (33), the plurality of throttle valves (30) comprising an electronic expansion valve (32), the fixing component (33) being fixed to a coil of the electronic expansion valve (32), and the fixing component (33) being snap-fitted to the valve seat (10).

9. The integrated module (1) according to claim 8, wherein the fixing component (33) comprises an elastic component (331) and an elastic hook (332), the elastic component (331) abutting against an upper end surface of the valve seat (10), and the elastic hook (332) is clamped to a slot on a sidewall of the valve seat (10).

10. A thermal management system (70) for a vehicle, comprising: an integrated module (1), the integrated module (1) being an integrated module (1) according to any one of claims 1 to 9.

11. A vehicle (80), comprising a thermal management system (70) according to claim 10.
